# EUROPÄISCHE PATENTANMELDUNG

(11) **EP 1 289 209 A2**
(43) Veröffentlichungstag der Anmeldung: **05.03.2003**
(21) Anmeldenummer: 02102244.7
(22) Anmeldetag: 30.08.2002
(51) Int. Cl.: H04L 12/56

(54) **Verteilung von Gewichtungen zwischen Portsteuerung und Vermittlungseinheiten einer Paketvermittlungsvorrichtung**

(30) Priorität: 31.08.2001 DE 10142460
(71) Anmelder: Philips Corporate Intellectual Property GmbH, 20099 Hamburg (DE); Koninklijke Philips Electronics N.V., 5621 BA Eindhoven (NL)
(72) Erfinder: van Wageningen, Andries, 52088, Aachen (DE); Reumerman, Hans-Jürgen, 52088, Aachen (DE); Lelkens, Armand, 52088, Aachen (DE); Ungermann, Jörn, 52088, Aachen (DE); Schoenen, Rainer, 52088, Aachen (DE)
(74) Vertreter: Volmer, Georg, Dipl.-Ing.

(57) **Zusammenfassung**

Die Erfindung bezieht sich auf eine Paketvermittlungsvorrichtung mit mehreren Leitungseinheiten (1 und 2), bestehend jeweils aus einer Portsteuerung (6 und 7) zur Speicherung und Anordnung von Paketen in Warteschlangen sowie zur taktzyklischen Generierung und Änderung von Gewichtungen, die Informationen über Zustände der Warteschlange enthalten, und mehreren Vermittlungseinheiten (3 bis 5) bestehend jeweils aus einer Koppelmatrix (8) und einer Zuteileinheit (9) zur Steuerung der Koppelmatrix (8). Dabei übermittelt die Portsteuerungen (6 und 7) jeweils eine geänderte und anhand eines Round-Robin Verfahrens (30) aus der Tabelle ausgewählte Gewichtung an die Zuteileinheit (9).

## Beschreibung

Die Erfindung bezieht sich auf eine Paketvermittlungsvorrichtung mit mehreren Vermittlungseinheiten.

Da die Datenübertragungsrate in Netzwerken stark ansteigt, führt die Entwicklung von Vermittlungsvorrichtungen zu immer höherem Datendurchsatz. In der Veröffentlichung "Weighted Arbitration Algorithms with Priorities for Input-Queued Switches with 100% Throughput" von R. Schoenen, G. Post, G. Sander, Broadband Switching Symposium '99, werden verschiedene, gewichtete Vermittlungsalgorithmen einer Paketvermittlungsvorrichtung verglichen. Die Vermittlungsalgorithmen versuchen mit unterschiedlichen Vermittlungsschritten eine Kollision mehrerer für den selben Ausgangsport der Paketvermittlungsvorrichtung bestimmter Pakete zu verhindern und daraus resultierenden Datenverlust oder Verzögerung zu reduzieren

Ein an einen Eingangsport der Paketvermittlungsvorrichtung ankommendes Datenpaket wird in Zellen konstanter Länge zerteilt. Durch eine Segmentierung der Datenpakete kann eine taktsynchrone Vermittlung der Zellen stattfinden. Sowohl die Eingangsportsteuerung sowie die Ausgangsportsteuerungen verfügen über Zwischenspeicher zur temporären Speicherung der Zellen. Die zu vermittelnden Zellen werden nach Priorität und gewünschten Ausgangsport der Paketvermittlungsvorrichtung angeordnet, dabei wird die Anordnungen der Pakete nach Priorität und einem gewünschten Ausgangsport als virtuelle Warteschlangen (VOQ bzw. Virtual Output Queue) bezeichnet.

Zusammen mit den Zellen werden Gewichtungen an die Vermittlungseinheiten verschickt zur Information der Vermittlungseinheit, für welchen Ausgangsport die Zelle bestimmt ist. Die Versendung der Zellen zusammen mit den Gewichtungen an die Vermittlungseinheit ist durch eine konstante Bandbreite der Verbindungen begrenzt.

Eine Paketvermittlungsvorrichtung besteht aus mehreren Leitungseinheiten (Line Card) und mehreren Vermittlungseinheiten (Switch Card). Zur Komponenten einer Leitungseinheit zählt als wesentliche Komponente eine Portsteuerung. Jede Portsteuerung ist mit mehreren parallel arbeitenden Vermittlungseinheiten verbunden und hat die Aufgabe, an der Paketvermittlungsvorrichtung ankommende, zu vermittelnde Zellen nach Priorität und gewünschtem Ausgangsport der Paketvermittlungsvorrichtung anzuordnen.

Weiterhin generiert die Portsteuerung Gewichtungen, die jeweils eine Verknüpfung eines Eingangsports mit einem Ausgangsport repräsentieren. Da die Gewichtungen durch die Portsteuerung generiert werden, kann die Portsteuerung die Zuteileinheit informieren, ob und wie dringend die sich im Eingangport befindende Zellen vermittelt werden sollten. Eine Gewichtung kann Informationen über die Priorität und Klasse der Zellen bzw. die Wartezeit oder Größe einer Warteschlange beinhalten.

Jede Vermittlungseinheit besteht aus einer Koppelmatrix (Crosspoint Matrix) und einer Zuteileinheit (Arbiter). Die Konfiguration der Koppelmatrix wird taktzyklisch durch die Zuteileinheit neu bestimmt und somit werden neue Verknüpfungen zwischen Ein- und Ausgangsport der Paketvermittlungsvorrichtung für die Vermittlung der Zellen erstellt.

Da die Bandbreite zwischen Portsteuerung und Zuteileinheit begrenzt ist, kann die Portsteuerung nur eine begrenzte Anzahl der Gewichtungen in jedem Taktzyklus der Zuteileinheit übermitteln. Bei einer Vermittlung mit mehreren Vermittlungseinheiten und schnell arbeitender Portsteuerung wird der Taktzyklus einer Portsteuerung kürzer sein als bei einer Vermittlung mit einer Vermittlungseinheit, während der Taktzyklus einer Zuteileinheit ungeändert bleibt.

Infolgedessen treten während eines Taktzyklus einer Zuteileinheit in der Portsteuerung mehrere Änderungen der Gewichtungen auf. Da die Anzahl der Gewichtung, welche die Portsteuerung einer Zuteileinheit in einem Taktzyklus der Zuteileinheit übermitteln kann beschränkt ist (z.B. zwei), kann nur ein Teil der geänderten Gewichtungen an jede einzelne Zuteileinheit übermittelt werden.

Der Erfindung liegt die Aufgabe zugrunde, bei konstanter Bandbreite der Verbindungen zwischen Portsteuerung und Vermittlungseinheit die Übertragungsgeschwindigkeit der Paketvermittlungsvorrichtung durch schnell arbeitende Portsteuerungen, zusätzliche Vermittlungseinheiten und ein Verfahren zur Verteilung von für die Vermittlung wichtigen Informationen zu erhöhen.

Die Aufgabe wird durch eine Paketvermittlungsvorrichtung der eingangs genannten Art dadurch gelöst, die Portsteuerungen jeweils zur Übermittlung einer geänderten, anhand eines Round-Robin Verfahrens aus einer Tabelle ausgewählten Gewichtung an die Zuteileinheit vorgesehen ist.

Falls eine Änderung einer Gewichtung stattgefunden hat, werden die Änderungen jeder Gewichtung in einer Tabelle gespeichert. Die Änderung der Gewichtung kann dadurch verursacht werden, dass aus einer Warteschlange eine Zelle zur Vermittlung an die Koppelmatrix übermittelt wurde oder eine an den Eingangsport ankommende Zelle in die Warteschlange eingefügt wurde.

Aus der Tabelle wird die an die Zuteileinheit zu übermittelnde, geänderte Gewichtung durch ein Round-Robin Verfahren als Bedienstrategie (Scheduling) aus der Tabelle bestimmt. Das Round-Robin Verfahren wird in Fällen benutzt, in denen mehrere konkurrierende Prozesse auf eine Ressource zugreifen möchten. Jeder Prozeß erhält eine begrenzte Zeit zur Verfügung, in der er auf die Ressource zugreifen kann. Nach Ablauf der Zeit kann der nächste Prozeß die Ressource in Anspruch nehmen. Eine Begrenzung liegt durch eine beschränkte Bandbreite zwischen Portsteuerung und Zuteileinheit vor, die eine maximale Anzahl der Gewichtung, welche die Portsteuerung in jedem Taktzyklus der Zuteileinheit an die Zuteileinheit übermitteln kann, bestimmt.

Dabei wird das Round-Robin Verfahren nicht auf alle, sondern nur auf die geänderten Gewichtungen angewandt und nur die geänderten Gewichtungen werden übermittelt. Bei einer Implementierung des Round-Robin Verfahrens wird ein Zeiger als Hilfsmittel verwendet, der zur Orientierung auf eine zu verschickende Gewichtung verweist. Durch eine gezielte Auswahl der zu übermittelten Gewichtungen kann die Portsteuerung schnell arbeiten und zusätzlich Vermittlungseinheiten zur Steigerung der Übertragungsgeschwindigkeit der Paketvermittlungsvorrichtung eingefügt werden.

Falls keine der Gewichtungen geändert wurde, wird durch ein zweites Round-Robin Verfahren eine der nicht geänderten Gewichtungen ausgewählt und verschickt. Dabei ist für jeder Vermittlungseinheit ein Zeiger des zweiten Round-Robin Verfahrens vorsehen. Der Zeiger des zweiten Round-Robin Verfahrens wird inkrementiert, wenn die Zuteileinheit der Vermittlungseinheit zum Empfang von durch eine Portsteuerung gesendete Informationen bereit ist.

Da die Änderung einer Gewichtung in der Tabelle festgehalten wird, kann ein der Gewichtung zugeordneter Zähler in der Portsteuerung zählen, wie oft die Gewichtung an die Zuteileinheit seit ihrer letzten Änderung übermittelt worden ist. Wenn die Gewichtung zur Zuteileinheit verschickt wird, erhöht sich die Anzahl im Zähler um eins Die Anzahl der Übermittlungen wird durch die Portsteuerung in der gleichen Tabelle abgespeichert.

Die Portsteuerung bestimmt aufgrund der Anzahl eine Priorität der Gewichtung Eine geringe Anzahl der bereits ausgeführten Übermittlungen resultiert in einer hohen Priorität der Gewichtung. Falls sich die Gewichtung ändert, wird der Zähler mit einer Null initialisiert. Anhand der Priorität der Gewichtung wird bestimmt, welche Gewichtung zuerst übermittelt wird, falls die Anzahl der geänderten Gewichtungen die Bandbreite der Verbindung zwischen Portsteuerung und Zuteileinheit übersteigt. Der Zähler kann benutzt werden, um eine maximale Anzahl der Übermittlungen für jede geänderte Gewichtung festzulegen. Wenn die maximale Anzahl der Übermittlungen für jede geänderte Gewichtung auf eins gesetzt wird, wird demzufolge eine geänderte Gewichtung nur an eine der Zuteileinheiten verschickt.

In einer zweiten Tabelle speichert die Portsteuerung die zuletzt übernittelten Gewichtungen. Anhand der Tabelle bildet die Portsteuerung Differenzen zwischen den zuletzt verschickten Gewichtungen und den aktuellen Gewichtungen. Aus den ermittelten Differenzen jeder Gewichtung wird eine maximale Differenz bestimmt und die dazugehörige Gewichtung an die Zuteileinheit übermittelt.

Zusätzlich wird für jede Zuteileinheit separat eine Tabelle mit den an diese Zuteileinheit bereits übermittelten Gewichtungen für jeden Ausgangsport erstellt. Die Tabelle enthält die der einen Zuteileinheit bekannten Gewichtungen. Die Differenz zwischen der zuletzt an diese Zuteileinheit übermittelten Gewichtung und der aktuellen Gewichtung wird für jedes Ausgangsport separat berechnet und die maximale Differenz aller Differenzen ermittelt. Anhand der maximalen Differenz kann eine Gewichtung bestimmt werden, welche an der Zuteileinheit übermittelt wird Falls sich die maximale Differenz mehrerer Gewichtungen gleicht, entscheidet das erste Round-Robin Verfahren, welche der Gewichtungen übermittelt wird

Die Portsteuerung enthält Informationen über die Priorität und Klasse der Zelle bzw. die Wartezeit oder Größe einer Warteschlange. Aus diesen Informationen werden die Gewichtungen gebildet. Die Informationen werden für jede Zuteileinheit separat gespeichert. Dabei enthält jede Tabelle einen Teil der Information und alle Teile der jeweiligen Tabellen zusammen ergeben die gesamte Information.

Eine an die Portsteuerung ankommende Zelle oder eine von der Portsteuerung abgehende Zelle können eine Änderung eines Zustandes (z.B. Größe) der Warteschlange, in der sie eingereiht oder entfernt wurden, zur Folge haben. Damit ändert sich die Information über diese Warteschlange und die Änderung wird weiter an eine der Tabellen einer Zuteileinheit weitergeleitet. Da die Änderung nicht in allen Tabellen aller Zuteileinheit notiert wird, muß eine Auswahl statt finden, an welche Tabelle einer Zuteileinheit die Änderung weitergeleitet wird. Die Auswahl kann durch ein Round-Robin Verfahren realisiert werden.

Da die Information der Warteschlangen über mehrere Tabellen in Teilen gespeichert ist, müssen nicht alle Tabellen geändert werden. Bei einer komplementären Verteilung der Information über die Tabellen wird jedes Teil der Information in nur einer Tabelle gespeichert. Die Änderung nur einer Tabelle hat eine Änderung des Zustands einer Warteschlange zur Folge. Die Auswahl einer Tabelle kann durch mehrere Verfahren (z.B. ein erstes und zweites Round-Robin, eine gleichmäßige Verteilung der Informationen für jede virtuelle Warteschlange) realisiert werden.

Aufgrund der Informationen, die in der Tabelle einer Zuteileinheit vorhanden sind, berechnet die Portsteuerung die Gewichtungen für diese Zuteileinheit. Die Gewichtungen führen zur qualitativ sehr guten Berechnungen der Zuteileinheiten und erhöhen somit die Übertragungsgeschwindigkeit der Paketvermittlungsvorrichtung bei einer konstanten und geringen Bandbreite der Verbindung zwischen der Portsteuerung und Zuteileinheit.

Die Erfindung betrifft auch eine Portsteuerung einer Leitungseinheiten, die Pakete in Warteschlangen anordnet und speichert sowie taktzyklisch Gewichtungen generiert und ändert, die Informationen über Zustände der Warteschlange enthalten. Die Portsteuerung übermittelt eine geänderte, anhand eines Round-Robin Verfahrens aus einer Tabelle ausgewählte Gewichtung an die Zuteileinheit.

Weiterhin betrifft die Erfindung ein Vermittlungsverfahren für eine Paketvermittlungsvorrichtung mit mehreren Vermittlungseinheiten und mehreren Leitungseinheiten. Jede Vermittlungseinheit besteht aus einer Koppelmatrix und einer Zuteileinheit zur Steuerung der Koppelmatrix. Jede Leitungseinheiten enthält wenigstens eine Portsteuerung, wobei die Portsteuerung Pakete in Warteschlangen speichert und anordnet, sowie taktzyklisch Gewichtungen generiert und ändert. Die Gewichtungen enthalten Informationen über Zustände der Warteschlangen. Eine geänderte Gewichtung wird zur Übermittlung an die Zuteileinheit anhand eines Round-Robin Verfahrens aus einer Tabelle ausgewählt.

Ein Ausführungsbeispiel der Erfindung wird nachstehend anhand der Figuren näher erläutert. Es zeigt:
- Fig. 1: eine Paketvermittlungsvorrichtung
- Fig. 2: eine Portsteuerung eines Eingangsports,
- Fig. 3: in einer Portsteuerung nach gewünschtem Ausgangsport, in virtuelle Warteschlangen angeordnete Zellen,
- Fig. 4: Generierung von mehreren Gewichtungen,
- Fig. 5: ein Round-Robin Verfahren als Bedienstrategie,
- Fig. 6: eine Tabelle mit einer Anzahl der Übermittlungen jeder Gewichtung,
- Fig. 7: eine Tabelle mit zuletzt übermittelten Gewichtungen und eine zweite Tabelle mit Differenzen zwischen zuletzt übermittelten und aktuellen Gewichtungen,
- Fig. 8: jeweils einer Zuteileinheit zugeordnete Tabellen mit zuletzt übermittelten Gewichtungen, und eine Tabelle mit Differenzen zwischen zuletzt übermittelten und aktuellen Gewichtungen,
- Fig. 9: jeweils einer Zuteileinheit zugeordnete Tabelle mit Informationen bzw. Gewichtungen, als auch jeweils einer Zuteileinheit zugeordnete Tabelle mit zuletzt übermittelten Gewichtungen und Differenzen zwischen zuletzt übermittelten und aktuellen Gewichtungen und
- Fig. 10: eine Verteilung von Informationen an einige einer Zuteileinheit zugeordnete Tabellen.

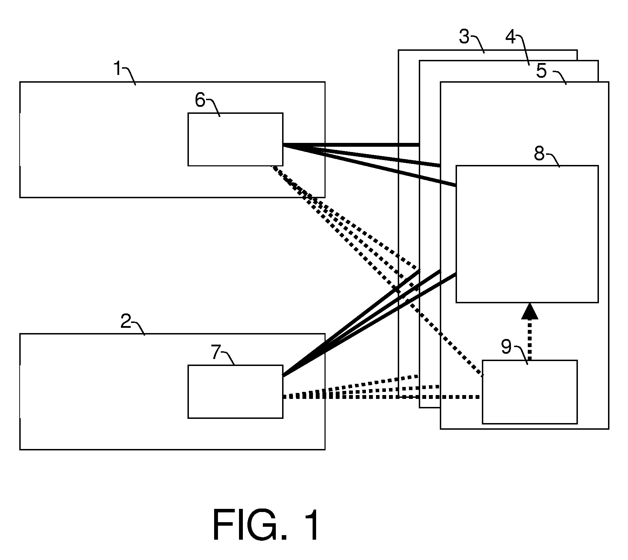

Eine in Fig. 1 dargestellte Paketvermittlungsvorrichtung besteht aus zwei Leitungseinheiten 1 und 2 und mehreren Vermittlungseinheiten 3 bis 5. Die Leitungseinheiten 1 und 2 bestehen jeweils aus unterschiedlichen für die Beschreibung des Ausführungsbeispiels nicht relevanten und deshalb nicht dargestellten Komponenten wie optische Übertragungseinheit, Rahmengenerator, Netzwerkprozessor etc., sowie einer für das Ausführungsbeispiel wesentlichen Portsteuerung 6 und 7. Die Anzahl der Portsteuerungen ist häufig viel größer als zwei, im Ausführungsbeispiel wurde sie aus Gründen der Übersichtlichkeit auf zwei beschränkt. Jede Vermittlungseinheit 3 bis 5 besteht aus einer Koppelmatrix 8 und einer Zuteileinheit 9. Sowohl die Zuteileinheit 9 sowie die Koppelmatrix 8 jeder parallel arbeitenden Vermittlungseinheit 3 bis 5 sind jeweils mit der Portsteuerung 6 und 7 verbunden.

Datenpakete konstanter Länge werden als Zellen bezeichnet. Da Zellen konstanter Länge bei der Vermittlung leichter zu handhaben sind als Pakete wechselnder Größe, werden die ankommenden Pakete innerhalb der Leitungseinheiten 1 und 2 in Zellen konstanter Länge zerteilt und in Warteschlangen zwischengespeichert. Nach einer erfolgreichen Vermittlung, d.h. akzeptierte Zuordnung jeweils eines Eingangsports mit einem Ausgangsport, werden die Zellen aus der Warteschlange entfernt.

Die Aufgabe der Portsteuerung 1 und 2 besteht darin, die ankommenden Zellen nach ihrer Priorität und gewünschtem Ausgangsport (Zielausgangsport) der Paketvermittlungsvorrichtung in Warteschlangen anzuordnen. Die Anordnung wird als virtuelle Warteschlange (VOQ Virtual Output Queuing) bezeichnet.

Anhand einer Gewichtung kann die Portsteuerung die Zuteileinheit informieren, ob und wie dringend die sich im Eingangport befindenden Zellen vermittelt werden sollten. Eine Gewichtung kann Angaben über die Priorität und Klasse der Pakete bzw. die Wartezeit oder Größe einer Warteschlange beinhalten.

Die Zuteileinheit 9 jeder Vermittlungseinheit 3 bis 5 berechnet in regelmäßigem Zeitabstand, sog. Taktzyklen, eine optimale Konfiguration der Koppelmatrix 8 zur Verknüpfung von Ein- und Ausgangsports der Paketvermittlungsvorrichtung. Die Berechnungen der Zuteileinheiten 9 basieren auf den Gewichtungen der Portsteuerungen 6 und 7, in denen die Zellen in Wartenschlagen auf ihre Vermittlung zu einem Ausgangsport warten. Die Verknüpfungen müssen zwei Bedingungen erfüllen. Innerhalb eines Taktzyklus der Vermittlungseinheit darf eine Verknüpfung nicht mehrere Ausgangsports mit einem Eingangsport und/oder mehrere Eingangsports mit einem Ausgangsport der Paketvermittlungsvorrichtung verknüpfen. Die Zuteileinheit 9 behält alle von der Portsteuerung 6 und 7 erhaltenen, aktuellen Gewichtungen und verschickt in jedem Taktzyklus die berechnete Konfiguration der Koppelmatrix 8 an die Portsteuerung 6 und 7 und die Koppelmatrix 8.

Da die Vermittlungseinheiten 3 bis 5 parallel betrieben werden, ist eine Betriebsgeschwindigkeit jeder Vermittlungseinheit 3 bis 5 geringer als eine interne Betriebsgeschwindigkeit der Portsteuerung 6 und 7. Somit ist auch ein Taktzyklus der Vermittlungseinheiten 3 bis 5 länger als ein interner Taktzyklus der Portsteuerung 1 und 2. Da jeweils die Portsteuerung 1 und 2 gleichzeitig mit mehreren Vermittlungseinheiten 3 bis 5 verbunden ist, benötigt sie eine Schnittstelle, welche gleichzeitig mit mehreren Vermittlungseinheiten 3 bis 5 betrieben werden kann. Die interne Betriebsgeschwindigkeit der Portsteuerung 6 und 7 hat den dreifachen Wert der Betriebsgeschwindigkeit einer Vermittlungseinheit 3 bis 5.

Nach Erhalt der durch die Zuteileinheit 9 berechneten Konfiguration und somit der Verknüpfungen ist der Portsteuerung bekannt, zu welcher Vermittlungseinheit 3 bis 5 sie im nächsten Taktzyklus der Vermittlungseinheit verbunden wird.

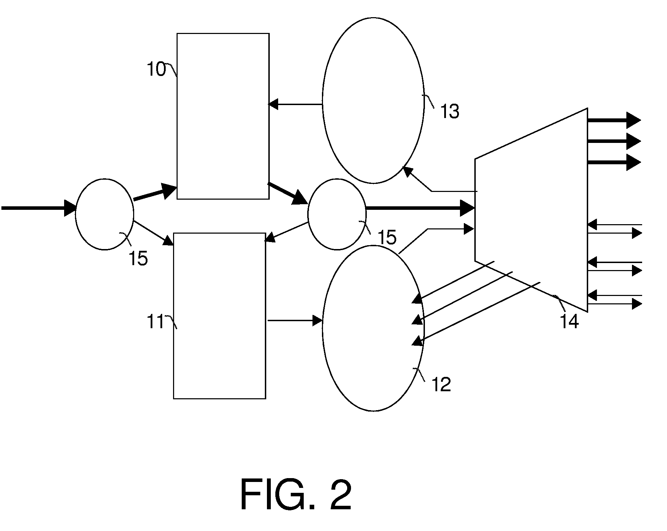

Eine in Fig. 2 dargestellte Portsteuerung eines Eingangsports besteht aus einer Speichereinheit 10 zur Speicherung von virtuellen Warteschlangen (VOQ im folgenden genannt), einer zweiten Speichereinheit 11 zur Speicherung von Zuständen der VOQs, sowie einer ersten und zweiten Entscheidungseinheit (12 und 13). Die erste Entscheidungseinheit 12 bestimmt, welche der Gewichtungen zur Zuteileinheit verschickt wird und die zweite Entscheidungseinheit 13 entscheidet, welche der in der Portsteuerung gespeicherten Zellen zum zuvor ausgewählten Ausgangsport verschickt wird Die Portsteuerung verfügt über eine Schnittstelle 14, die eine Verbindung zu mehreren Zuteileinheiten und mehreren Koppelmatrizen sichert.

Eine den Eingangsport erreichende Zelle 15 wird durch die Portsteuerung 6 in Abhängigkeit ihrer Priorität und Zielausgangsport in VOQs in der ersten Speichereinheit 10 abgespeichert. Gleichzeitig wird der durch die ankommende Zelle geänderte Zustand der VOQ in der Speichereinheit 11 abgespeichert.

Die VOQs werden durch sog. Zustände beschrieben. Der Zustand einer VOQ kann eine Länge, ein Größe der VOQ wiedergeben. Die Zustände der VOQ werden in der zweiten Speichereinheit 11 abgespeichert. Anhand der Zustände wählt die erste Entscheidungseinheit 10 eine Gewichtung aus, die durch die Schnittstelle 14 an eine Zuteileinheit 9 gesendet wird.

Ein von der Zuteileinheit 9 an die Schnittstelle 14 übermitteltes Resultat (grant) gibt an, zu welchem Ausgangsport die Portsteuerung die Zelle 15 übermitteln darf. Dem Resultat wird durch die Entscheidungseinheit 13 die Zelle 15 zugewiesen, die zum ausgewählten Ausgangport vermittelt wird. Gleichzeitig wird der durch die vermittelte Zelle geänderte Zustand der VOQ in der Speichereinheit 11 abgespeichert. Nach der Vermittlung wird die Zelle aus der Speichereinheit 10 entfernt.

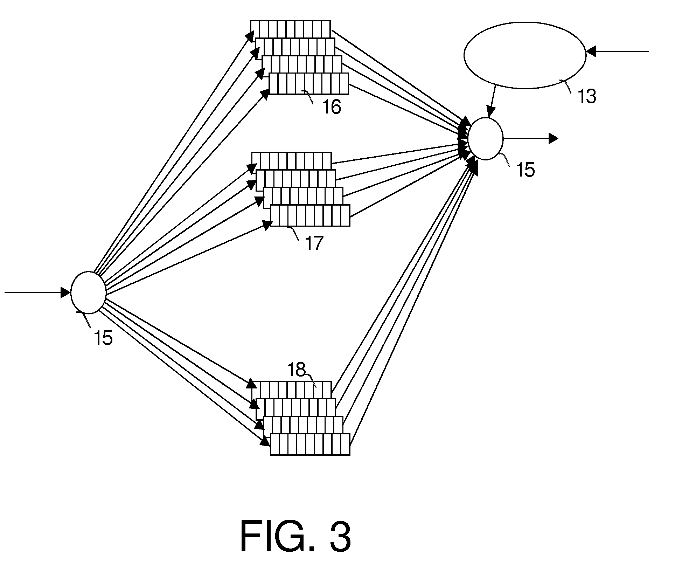

In Fig 3 werden mehrere virtuelle Warteschlangen (VOQs) 16 bis 18 dargestellt, welche in der Speichereinheit 10 gespeichert werden. Die VOQ s 16 beinhalten Zellen, die als Zielausgangsport einen Ausgangsport O1 angegeben haben. Die VOQ s 17 beinhalten Zellen, die zum Zielausgangsport O2 vermittelt werden sollten und die VOQ s 18 beinhalten Zellen, die als Zielausgangsport einen Ausgangsport O3 angegeben haben. Die Anzahl der Ein- und Ausgangsports ist auf drei beschränkt, kann aber einen Wert wie z.B. 64 erreichen.

Die an die Portsteuerung 6 ankommende Zelle 15 wird in Abhängigkeit ihres Zielausgangsports in eine der VOQs 16 bis 18 eingeordnet. Das von einer Zuteileinheit 9 übergebene Resultat wird durch die Entscheidungseinheit 13 benutzt um die Zelle 15 aus einer der VOQ 16 bis 18 zum ausgewählten Ausgangport zu vermitteln.

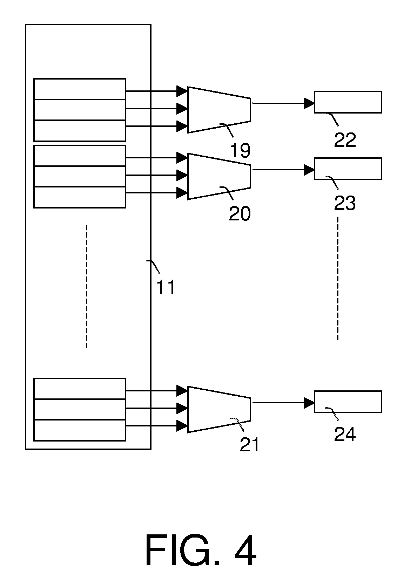

Fig 4 verdeutlicht eine Generierung von Gewichtungen 22 bis 24. Eine Generatoreinheit 19 bis 21 ist jeweils einem Ausgangsport zugeordnet und wertet die zu diesem Ausgangsport gehörende, in der Speichereinheit 11 abgespeicherten Zustände der VOQs aus

Die Generatoreinheit 19 berechnet anhand der in der Speichereinheit 11 gespeicherten Zustände der VOQs eine Gewichtung 22. Analog wird die Gewichtung 23 durch die Generatoreinheit 20 und die Gewichtung 24 durch die Generatoreinheit 21 anhand der jeweiligen Zustände der VOQs bestimmt. Die Bestimmung der Gewichtung 22 bis 24 ist von der durch den Gerator 19 bis 21 ausgeführten Funktion abhängig.

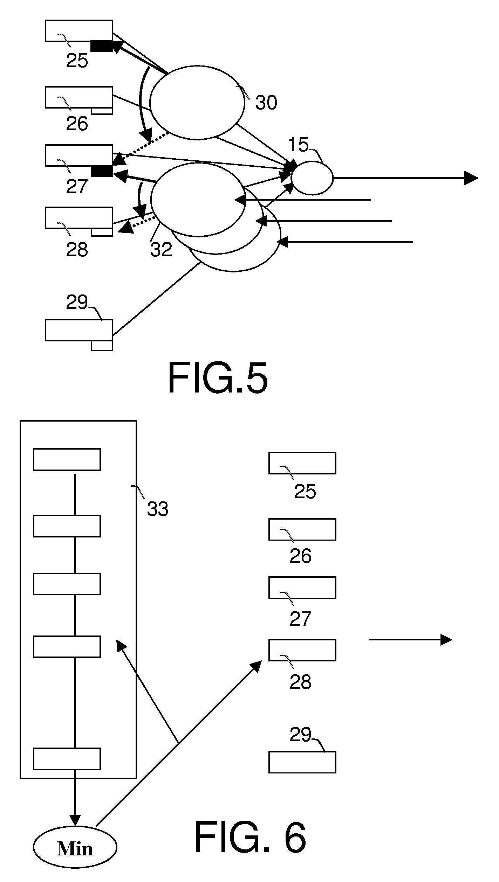

In Fig 5 werden zwei Bedienstrategien, ein erstes Round-Robin Verfahren 30 und ein zweites Round-Robin Verfahren 32 dargestellt, die jeweils eine Gewichtung 25 bis 29 zur Übermittlung an die Zuteileinheit auswählen. Dabei sind Gewichtungen 25 und 27 geändert worden und Gewichtung 26, 28 und 29 unverändert geblieben.

Das erste Round-Robin Verfahren 30 bestimmt aus den geänderten Gewichtungen 25 und 27 eine Gewichtung zur Übermittlung an die Zuteileinheit 9. Falls keine geänderte Gewichtung vorhanden ist, entscheidet das zweite Round-Robin Verfahren 32, welche der Gewichtung 25 bis 29 übermittelt wird. Im nächsten Taktzyklus der Portsteuerung 6 bestimmt das erste Round-Robin Verfahren 30 die aktuell veränderte Gewichtung 25 zur Übermittlung an die Zuteileinheit 9.

Dabei ist für jede Vermittlungseinheit ein Zeiger des zweiten Round-Robin Verfahrens 32 vorgssehen. Der Zeiger dient sowohl beim ersten Round-Robin Verfahren als auch beim zweiten Round-Robin Verfahrens 32 als Hilfsmittel zur Markierung einer Gewichtung Der Zeiger des zweiten Round-Robin Verfahren 32 wird inkrementiert, wenn die Zuteileinheit 9 der Vermittlungseinheit 5 zum Empfang von durch eine Portsteuerung 6 gesendeten Informationen bereit ist. Der Zeiger des ersten Round-Robin Verfahrens 30 wird in jedem Taktzyklus der Portsteuerung 6 auf die nächst geänderte Gewichtung 27 erhöht. Eine Erhöhung des Zeigers kann entweder durch mehrfache Inkrementierung stattfinden oder durch eine geschickte kombinatorische Logik. Bei beiden Möglichkeiten führt der Zeiger eine Modulo N Funktion aus, wobei N eine Anzahl der Ausgangsports ist. Der Zeiger des ersten Round-Robin Verfahrens wird nicht verändert, wenn keine neue Gewichtung vorhanden sind.

Eine in Fig 6 dargestellte Tabelle 33 enthält mehrere Werte, die jeweils einer Gewichtung 25 bis 29 zugeordnet sind und eine Anzahl der Übermittlungen der Gewichtung 25 bis 29 an die Zuteileinheit wiedergeben.

Durch einen Zähler in der Portsteuerung kann eine Anzahl der Übermittlungen jeder Gewichtung an die Zuteileinheit 9 festgehalten werden. Wenn die Gewichtung zur Zuteileinheit 9 übermittelt wird, erhöht sich die Anzahl im Zähler um eins. Die Anzahl der Übermittlungen wird durch die Portsteuerung in einer Tabelle 33 abgespeichert. Die Portsteuerung bestimmt aufgrund der Anzahl eine Priorität der Gewichtung. Eine geringe Anzahl der bereits ausgeführter Übermittlungen resultiert in einer hohen Priorität der Gewichtung Die Auswahl einer zuerst zu übermittelten Gewichtung wird durch die Priorität der Gewichtung bestimmt.

Die Portsteuerung bestimmt eine kleinste Anzahl aus den Werten der Tabelle 33. Da die Tabelle 33 für die Gewichtung 28 eine geringste Anzahl der Übermittlungen angibt, wird die Gewichtung 28 an die Zuteileinheit 9 übergeben. Falls sich der Wert der Gewichtung ändert, wird der Zähler mit einer Null initialisiert.

Der Zähler kann zur Bestimmung einer maximalen Anzahl der Übermittlungen für jede geänderte Gewichtung 25 und 27 verwendet werden. Wenn die maximale Anzahl der Übermittlungen für jede geänderte Gewichtung 25 und 27 auf eins festgelegt wird, wird eine geänderte Gewichtung 25 und 27 nur an eine der Zuteileinheiten 9 übermittelt. Dadurch kann der Zähler mit einem einzigen Bit realisiert werden. Falls die Änderung bei einer Übermittlung der Gewichtung aus der Tabelle herausgenommen oder wieder auf ungeändert gesetzt wird, ist der Zähler nicht notwendig

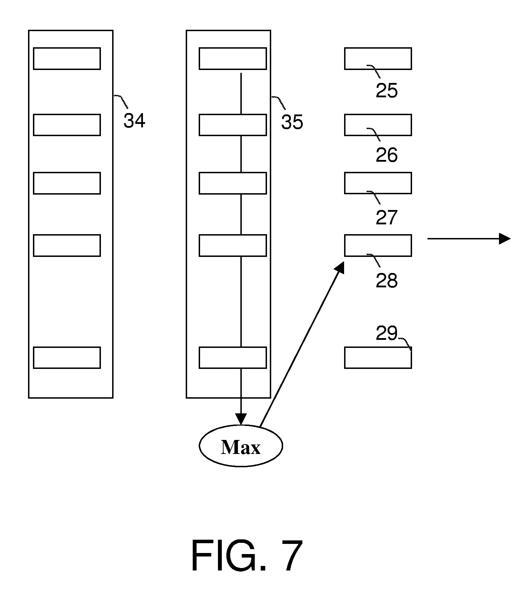

In Fig 7 sind zwei Tabellen 34 und 35 abgebildet. Tabelle 34 enthält mehrere, zuletzt übermittelte Gewichtungen für jeden Ausgangsport, welche die Zuteileinheiten 9 jeder Vermittlungseinheit übermittelt wurden. Tabelle 35 besteht aus Differenzen, die jeweils zwischen einer zuletzt übermittelten Gewichtung und einer aktuellen Gewichtung 25 bis 29 ermittelt wurden.

In der Tabelle 34 speichert die Portsteuerung die zuletzt übermittelten Gewichtungen ab. Anhand der Tabelle bildet die Portsteuerung eine Differenz zwischen der jeweils zuletzt übermittelten Gewichtung und der aktuellen Gewichtung 25 bis 29. Die Differenzen sind wie die Gewichtungen 25 bis 29 jeweils einem Ausgangsport zugeordnet. Aus den ermittelten Differenzen wird eine maximale Differenz, die der Gewichtung 28 entspricht, bestimmt. Daraufhin wird die dazugehörige Gewichtung 28 an die Zuteileinheit verschickt.

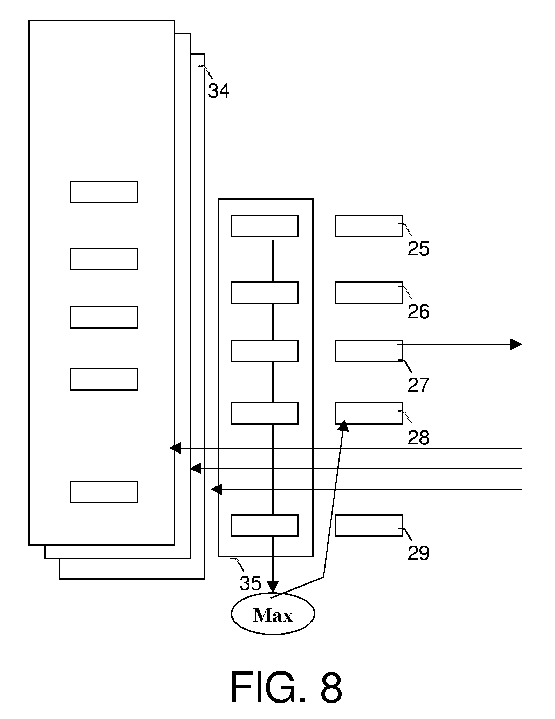

Fig 8 zeigt mehrere Tabellen 34. Jede Tabelle 34 ist einer Zuteileinheit 9 zugeordnet. Für jede Zuteileinheit 9 werden in einer der Tabelle 34 die zu dieser Zuteileinheit zuletzt übermittelte Gewichtung jedes Ausgangsports gespeichert. Somit enthält jede Tabelle 34 die der jeweiligen Zuteileinheit 9 bekannten Gewichtungen.

Die Differenzen zwischen der jeweils zuletzt verschickten Gewichtung und der aktuellen Gewichtung 25 bis 29 werden mit Hilfe jeweils der zu der Zuteileinheit 9 gehörender Tabelle 34 berechnet. Die Differenzen sind wie die Gewichtungen 25 bis 29 jeweils einem. Ausgangsport zugeordnet. Aus den ermittelten Differenzen wird eine maximale Differenz, die der Gewichtung 28 entspricht, bestimmt. Daraufhin wird die dazugehörige Gewichtung 28 an die dazugehörende Zuteileinheit verschickt.

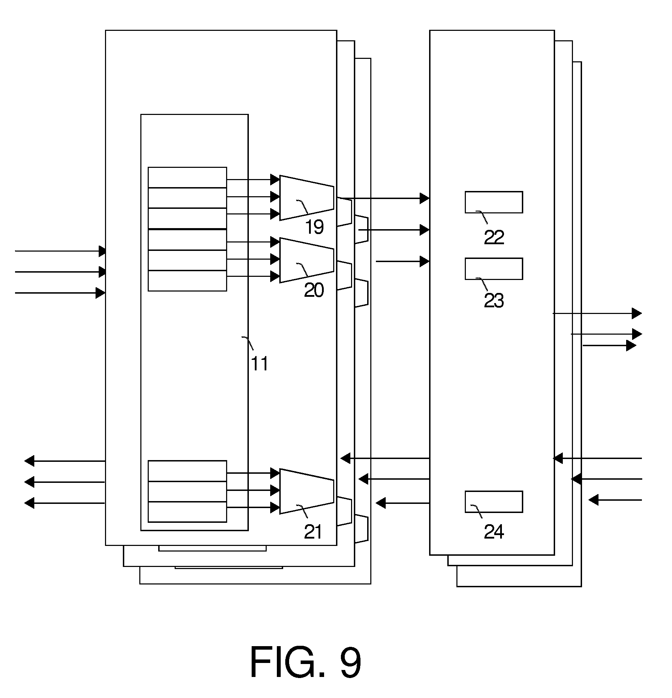

Fig. 9 zeigt mehrere Speichereinheiten 11, die jeweils einer Zuteileinheit zugeordnet sind und die der jeweiligen Zuteileinheit 9 bestimmte Zustände der VOQs enthalten. Die Tabellen 34 und 35 sind jeweils einer Zuteileinheit 9 zugeordnet.

Anhand der Zustände der VOQs jeder Speichereinheit 10 berechnen die Generatoren 19 bis 21 für jede Zuteileinheit 9 die aktuellen Gewichtungen 22 bis 24. Für jede Zuteileinheit 9 wird in der Tabelle 34 für jeden Ausgangsport die zuletzt an die Zuteileinheit 9 übermittelte Gewichtung festgehalten. Die Portsteuerung ermittelt für jede Zuteileinheit 9 die maximale Differenz aus den Differenzen der Tabelle 35 zwischen der aktuellen Gewichtungen 22 bis 24 und der dazugehörigen zuletzt übermittelten Gewichtungen der Tabelle 34 und übermittelt die dazugehörende Gewichtung an die Zuteileinheit 9.

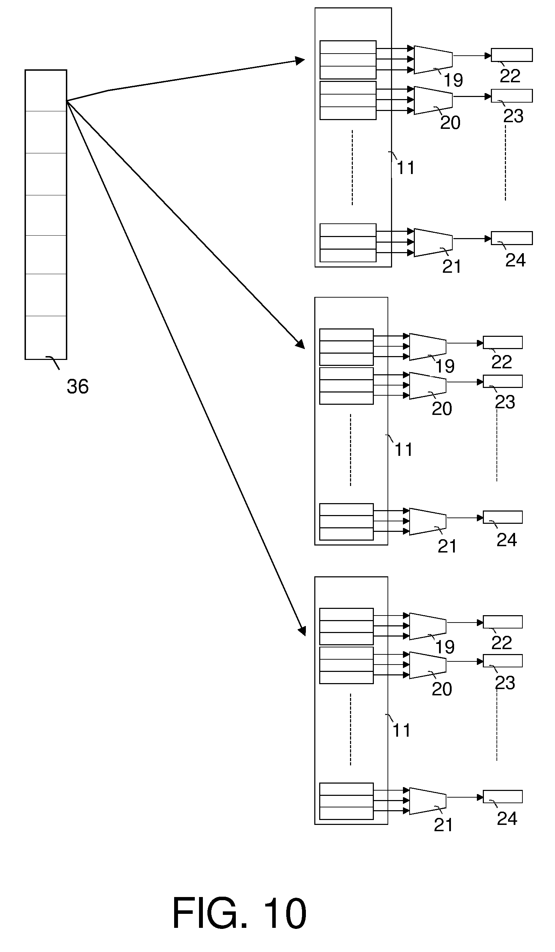

Fig 10 zeigt eine Verteilung der Änderungen der Zustände der VOQ. Die aktuellen Zustände der VOQ werden in der Tabelle 36 auf mehrerer Speichereinheiten 11 verteilt in jedem Taktzyklus gespeichert. Jede Speichereinheit 11 enthält einen Teil der Informationen über die Zustände der VOQ, die jeweils dieser Zuteileinheit 9 zugeteilt sind Von jeder VOQ wird ein Teil eines gesamten Zustands in jede Zuteileinheit 9 separat gespeichert. Die Teile der Zustände ergänzen sich zusammen komplementär, so daß keine zwei Teile dieselbe Information enthalten.

Am Beispiel einer gesamten Größe der VOQ würde diese in Teile-Größen verteilt werden, wobei eine Summe der Teil-Größen einer gesamten Größe der VOQ entspricht. Am Beispiel der Wartezeit einer Zelle in der VOQ würde eine gesamte Summe der Wartezeiten der VOQ in Teil-Summen aufgeteilt werden.

Aufgrund der Informationen, die in jeder Speichereinheit 11 vorhanden sind, berechnen die Generatoreinheiten 19 bis 21 die Gewichtungen 22 bis 24 für jede Zuteileinheit.

Eine an die Portsteuerung ankommende Zelle oder eine von der Portsteuerung abgehende Zelle können eine Änderung der VOQ, in der sie eingereiht oder entfernt wurden, zur Folge haben. Damit ändert sich der gesamte Zustand der VOQ und die Änderung wird weiter an eine der Speichereinheiten 11 einer Zuteileinheit 9 weitergeleitet um ein Teil eines Zustandes zu ändern. Da die Änderung nicht in allen Speichereinheiten aller Zuteileinheit notiert wird, muß eine Auswahl statt finden, an welche Speichereinheit 11 einer Zuteileinheit der VOQ Zustand geändert werden soll. Die Auswahl kann durch ein mehrere Verfahren realisiert werden.

Die Auswahl kann durch ein einzelnes Round-Robin Verfahren realisiert werden Eine Ausrührung kann auf mehrere Möglichkeiten angewandt werden:
1. In jedem Taktzyklus der Portsteuerung verweist der Zeiger des Round-Robin Verfahrens auf die nächste Speichereinheit 11.
2. Für jede an die Portsteuerung ankommende Zelle wird der Zeiger des Round-Robin Verfahrens auf die nächste Speichereinheit 11 verweisen.
3. Der Zeiger des Round-Robin Verfahrens verweist auf die nächste Speichereinheit 11.
4. Für jede einzelne Änderung des gesamten Zustands wird der Zeiger des Round-Robin Verfahrens auf die nächste Speichereinheit 11 verweisen.

Die Auswahl kann durch ein zweites Round-Robin Verfahren realisiert werden. Das erste Round-Robin Verfahren bezieht sich dabei auf den Eingangsport der Portsteuerung und das zweite Round-Robin Verfahren auf die Vermittlungseinheiten 3 bis 4. Durch mehrere Möglichkeiten kann des ersten Round-Robin Verfahren dabei ausgeführt werden:
1. In jedem Taktzyklus der Portsteuerung verweist der Zeiger des Round-Robin Verfahrens auf die nächste Speichereinheit 11.
2. Für jede ankommende Zelle mverweist der Zeiger auf die nächste Speichereinheit 11.

Eine Zeitspanne, die benötigt wird um die Änderung eines Zustands in eine Zuweisung des Zeigers umzusetzen, kann verkürzt werden, indem die Änderung innerhalb der Speichereinheit 11 durchführt wird und deren Zeiger zunächst als erster bereit ist, eine neue Zuweisung auszuführen. Dieses Verfahren kann angewendet werden entweder auf die Änderungen, die durch eine Vermittlung verursacht werden, oder auf die Änderungen, die durch ankommende Zellen verursacht werden, oder auf beide Änderungen gleichzeitig

Ein weiteres Verfahren zielt auf eine gleichmäßige Verteilung der einzelnen verteilten Zustände jeder VOQ ab.

Die gesamte Größe einer VOQ beträgt 12. Wenn die Teil-Größen für die VOQ in jeder von insgesamt vier Speichereinheiten 11 alle drei betragen, dann ist der Zustand dieser VOQ gleichmäßig verteilt. Dabei jeder ankommenden Zelle der Zustand einer VOQ vergrößert wird und bei einer Vermittlung der Zustand einer VOQ verringert wird, wird die Auswahl der Speichereinheit 11 durch folgende Verfahren durchgeführt:
1. Für jede einkommende Zelle wird die Speichereinheit 11 ausgewählt, in welcher der VOQ Zustand am kleinsten ist. Falls mehrere VOQ Zustände gleichzeitig gleich klein sind, wird zusätzlich mit Hilfe von des Round-Robin Verfahrens bestimmt, welche dieser kleinsten VOQ Zuständen ausgewählt wird.
2. Für jede Vermittlung einer Zelle wird die Speichereinheit 11 ausgewählt, in welcher der VOQ Zustand am größten ist. In Falle mehrere gleich großer Zustände der VOQs wird zusätzlich mit Hilfe von Round-Robin Verfahren bestimmt, welcher der größten Zustände der VOQs ausgewählt wird.

Die Größe eines VOQ Zustands kann z.B. von der Größe der VOQ, oder auch von der Zahl der Wartezeiten der Zellen dieser VOQ bestimmt werden.

## Patentansprüche

1. Paketvermittlungsvorrichtung mit mehreren Leitungseinheiten (1 und 2), bestehend jeweils aus einer Portsteuerung (6 und 7) zur Speicherung und Anordnung von Paketen in Warteschlangen sowie zur taktzyklischen Generierung und Änderung von Gewichtungen, die Informationen über Zustände der Warteschlangen enthalten, und mehreren Vermittlungseinheiten (3 bis 5) bestehend jeweils aus einer Koppelmatrix (8) und einer Zuteileinheit (9) zur Steuerung der Koppelmatrix (8),wobei die Portsteuerungen (6 und 7) jeweils zur Übermittlung einer geänderten, anhand eines Round-Robin Verfahrens (30) aus einer Tabelle ausgewählten Gewichtung an die Zuteileinheit (9) vorgesehen ist.

2. Paketvermittlungsvorrichtung nach Anspruch 1
**dadurch gekennzeichnet,**
**dass** die Portsteuerung (6 und 7) durch ein zweites Round- Robin-Verfahren (32) zur Auswahl einer Gewichtung zur Übermittlung an die Zuteileinheit (9) vorgssehen ist, falls keine geänderte Gewichtung vorhanden ist und
**dass** in jeder Vermittlungseinheit ein Zeiger des zweiten Round-Robin Verfahren (32) zur Markierung einer Gewichtung vorgssehen ist und
**dass** der Zeiger inkrementiert wird, wenn die Zuteileinheit der Vermittlungseinheit zum Empfang von Informationen bereit ist.

3. Paketvermittlungsvorrichtung nach Anspruch 2
**dadurch gekennzeichnet,**
- **dass** ein jeder Gewichtung zugeordneter Zähler in der Portsteuerung (6 und 7) zum Zählen der Übermittlungen der Gewichtung an die Zuteileinheit seit einer letzten Änderung der Gewichtung vorgesehen ist,
- **dass** die Portsteuerung (6 und 7) zur Speicherung einer Anzahl der Übermittlungen in der Tabelle vorgesehen ist und
- **dass** die Portsteuerung (6 und 7) zur Bestimmung einer Priorität der Gewichtung in Abhängigkeit der Anzahl der Übermittlungen und zur Übermittlung der Gewichtung mit der höchsten Priorität an die Zuteileinheit (9) vorgesehen ist
- die Anzahl der Übermittlungen seit einer letzten Änderung der Gewichtung begrenzt werden kann.

4. Paketvermittlungsvorrichtung nach Anspruch 3
**dadurch gekennzeichnet,**
**dass** die Portsteuerung zur Speicherung einer zweiten Tabelle (34), welche für jeden Ausgangsport die zuletzt übermittelte Gewichtung enthält, vorgesehen ist und
**dass** die Portsteuerung zur Ermittlung einer Differenz zwischen den übermittelten und aktuellen Gewichtungen und zur Bestimmung einer maximalen Differenz zwischen den Gewichtungen vorgesehen ist.

5. Paketvermittlungsvorrichtung nach Anspruch 4
**dadurch gekennzeichnet,**
**dass** für jede Zuteileinheit eine separate Tabelle (34) mit den zuletzt an die Zuteileinheit übermittelten Gewichtungen für jeden Ausgangsport vorgesehen ist und
**dass** die Portsteuerung zur Ermittlung einer Differenz und Bestimmung einer maximalen Differenz zwischen einer aktuellen Gewichtung und der zuletzt übermittelten Gewichtung an die Zuteileinheit vorgesehen ist.

6. Paketvermittlungsvorrichtung nach Anspruch 4
**dadurch gekennzeichnet,**
**dass** die Portsteuerung (6 und 7) zur Speicherung einer Tabelle mit Informationen für jede Zuteileinheit separat vorgesehen ist,
**dass** eine Änderungen der Informationen auf die Tabellen mit Informationen der Zuteileinheiten verteilt werden und
**dass** die Portsteuerung (6 und 7) aus der separaten Tabelle mit Informationen zur Generierung der Gewichtungen für jede Zuteileinheit vorgesehen ist.

7. Portsteuerung (6 und 7) einer Leitungseinheiten (1 und 2)
- zur Speicherung und Anordnung von Paketen in Warteschlangen sowie
- zur taktzyklischen Generierung und Änderung von Gewichtungen, die Informationen über Zustände der Warteschlangen enthalten und
- zur Übermittlung einer geänderten, anhand eines Round-Robin Verfahrens (30) aus einer Tabelle ausgewählten Gewichtung an die Zuteileinheit (9).

8. Vermittlungsverfahren für eine Paketvermittlungsvorrichtung mit mehreren Vermittlungseinheiten (3 bis 5), bestehend jeweils aus einer Koppelmatrix (8) und einer Zuteileinheit (9) zur Steuerung der Koppelmatrix (8), und mehreren Leitungseinheiten (1 und 2), bestehend jeweils aus einer Portsteuerung (6 und 7), wobei in der Portsteuerung (6 und 7)
- Pakete in Warteschlangen angeordnet und gespeichert werden, sowie
- taktzyklischen Gewichtungen generiert und geändert werden, die Informationen über Zustände der Warteschlangen enthalten und
- eine geänderte Gewichtung zur Übermittlung an die Zuteileinheit (9) anhand eines Round-Robin Verfahrens (30) aus einer Tabelle ausgewählten wird
